# EUROPÄISCHE PATENTSCHRIFT

(11) **EP 0 990 561 B1**
(45) Veröffentlichungstag und Bekanntmachung des Hinweises auf die Patenterteilung: **18.06.2003**
(21) Anmeldenummer: 99119371.5
(22) Anmeldetag: 29.09.1999
(51) Int. Cl.: B60R 13/02, B60R 7/02, B60H 1/00

(54) **Multifunktionelles Verkleidungsteil**
Multifunctional trim panel
Elément d'habillage multifunctionel

(30) Priorität: 30.09.1998 DE 19845100
(43) Veröffentlichungstag der Anmeldung: 05.04.2000
(73) Patentinhaber: MAGNA NÄHER GmbH, 71706 Markgröningen (DE)
(72) Erfinder: Kobiela, Andreas, Dipl.-Ing., 71706 Markgröningen (DE); Pestke, Joachim, Dipl.-Ing., 71706 Markgröningen (DE)
(74) Vertreter: Patentanwälte Ruff, Wilhelm, Beier, Dauster & Partner

(56) Entgegenhaltungen:
- EP-A- 0 348 296
- EP-A- 0 713 806
- DE-A- 3 702 629
- DE-A- 19 540 399
- FR-A- 2 542 828

## Beschreibung

Die vorliegende Erfindung betrifft ein multifunktionelles Verkleidungsteil für den Kraftfahrzeug-Innenraum, insbesondere für Fußraum, Armlehne oder Kopfstütze.

Es sind bereits Innenraumverkleidungen mit textiler oder glatter Oberfläche zur Innenraumabgrenzung und optischen Verbesserung bekannt. Derartige Innenraumverkleidungen haben jedoch meist nur optische Funktion und die Integration weiterer Funktionen ist schwierig.

Die FR-A-2 542 828 beschreibt ein Innenverkleidungsteil für einen Autobus, bei dem Verkleidungsplatten mit Lüftungsschlitzen versehen und an einem Scharnier schwenkbar gelagert sind, wobei die Verkleidungsplatten einen als Lüftungskanal ausgebildeten Raum für interne Ausrüstung des Autobusses abdecken.

Aufgabe der vorliegenden Erfindung ist die Angabe eines multifunktionellen Verkleidungsteils für den Kfz-Innenraum, das eine Verbindung mit der Lüftungsführung des Kfz aufweist und zur Klimatisierung dient.

Diese Aufgabe wird erfindungsgemäß gelöst durch ein multifunktionelles Verkleidungsteil für den Kfz-Innenraum nach Anspruch 1. Dabei ist das multifunktionelle Verkleidungsteil gemäß der Erfindung vorgesehen als separate Einlage in Teppich-Vertiefungen, z. B. im Fußraum des Fahrerbodens oder im Fußraum des Fondbodens. Ferner ist ein Einsatz vorgesehen als integrierte Armlehne in Türverkleidungen oder als Armlehne in der Fondsitzmitte. Schließlich kommt auch ein Einsatz als Kopfstütze bzw. als Deckel eines Schuhablagefachs oder als Fußstütze in Betracht.

Bevorzugt ist in oder unter dem textilen Außenmaterial eine elastomere Einlage eingebettet. Die elastomere Einlage dient als besondere optische Verkleidung oder als Beleuchtungsfenster.

In der elastomeren Einlage oder dem elastomeren Außenmaterial ist bevorzugt eine Beleuchtungseinrichtung angeordnet. Dadurch kann eine individuell anpaßbare Beleuchtungsfunktion in dem Verkleidungsteil integriert werden.

In der Aufnahme ist bevorzugt ein Innenraum zur Aufnahme von Gegenständen gebildet. Diese Ausgestaltung dient als Stauraum zur Aufnahme beispielsweise von Schuhen zur Komforterweiterung des Verkleidungsteils.

Bevorzugt ist eine Antriebseinrichtung vorgesehen, um die Aufnahme zu heben und zu senken. Damit läßt sich die Aufnahme zwischen der Funktionsstellung und der Außerfunktionsstellung verschieben.

Die Aufnahme hat bevorzugt keilförmige Form und an ihrem spitzen Ende ist sie bevorzugt angelenkt. Damit ist eine wirksame Verschwenkbarkeit bei geringem konstruktivem Aufwand gewährleistet.

Die Ausführungsform dient insbesondere der Ausbildung des multifunktionellen Verkleidungsteils als schwenkbare Fußstütze im Pkw-Bodenbereich.

Weitere Vorteile, Merkmale und Anwendungsmöglichkeiten der vorliegenden Erfindung ergeben sich aus der nachfolgenden Beschreibung von bevorzugten Ausführungsbeispielen mit der Zeichnung:
Fig. 1 zeigt eine perspektivische Ansicht eines Pkw-Innenraums mit verschiedenen Verkleidungsteilen, die als Einsatzbereich des multifunktionellen Verkleidungsteils gemäß der Erfindung in Betracht kommen.
Fig. 2 zeigt eine Ausbildung eines multifunktionellen Verkleidungsteils gemäß der Erfindung.
Fig. 3 zeigt die Ausführungsform von Fig. 2 in Funktionsstellung und Außerfunktionsstellung.

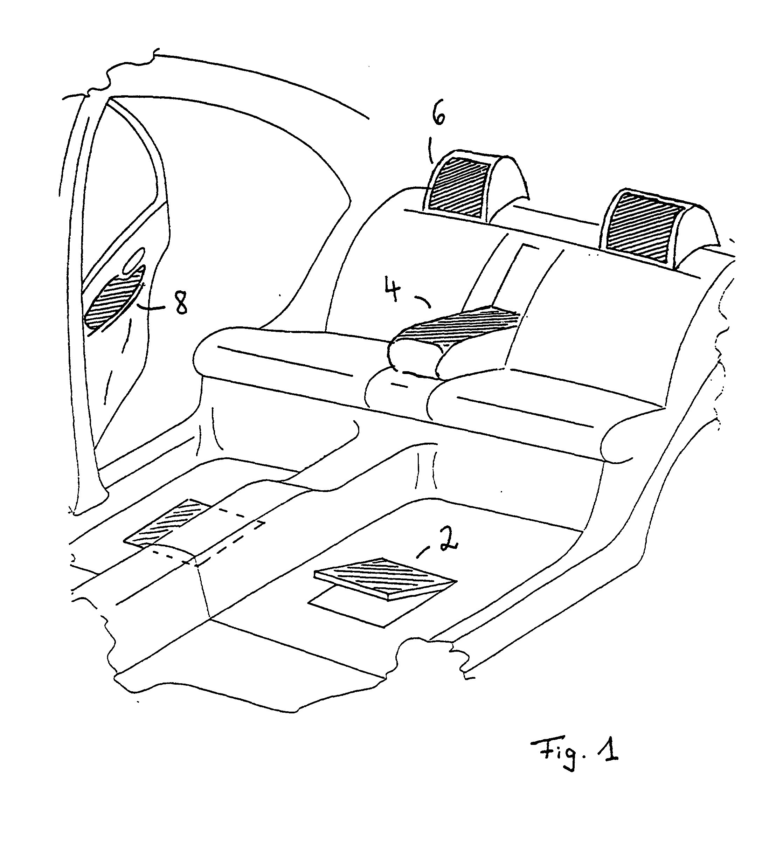

Fig. 1 zeigt einen Einblick in den Innenraum eines Pkws. In Betracht kommt ein Einsatz eines multifunktionellen Verkleidungsteils 2 im Bereich eines Fußraums als Bodenmatte, Bodenklappe, etc. Ferner kommt ein multifunktionelles Verkleidungsteil 4 als Armlehne in Betracht. Ferner ist ein Verkleidungsteil 8 als Armlehne im Fond denkbar. Schließlich sind Verkleidungsteile 6 als Kopfstützen in Betracht zu ziehen.

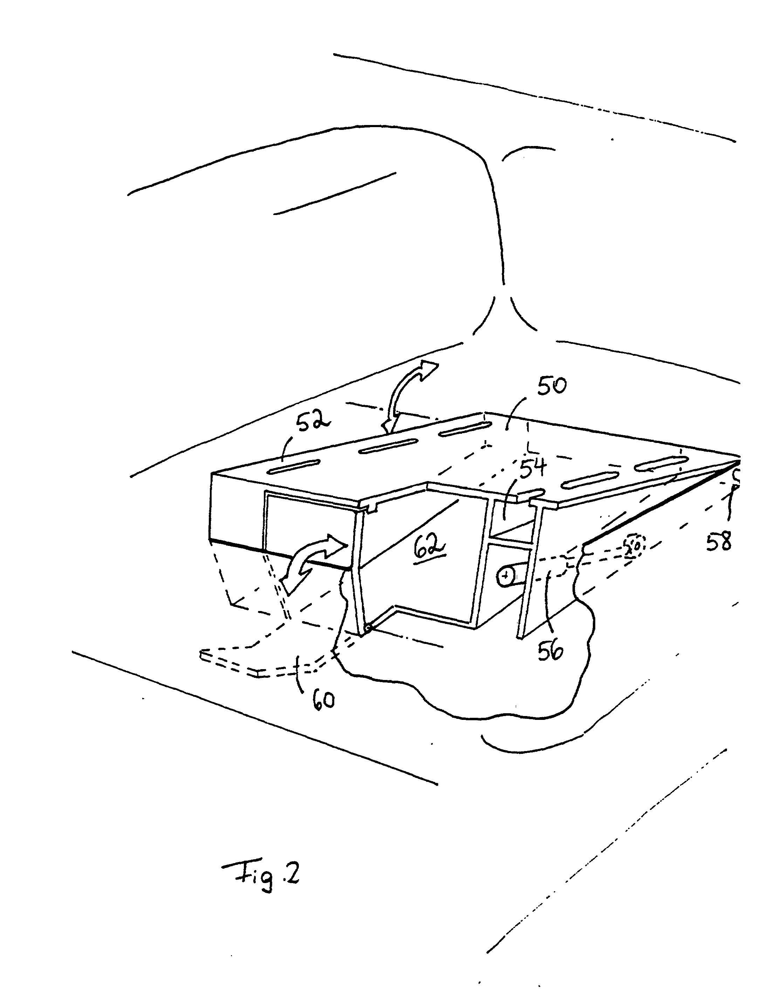

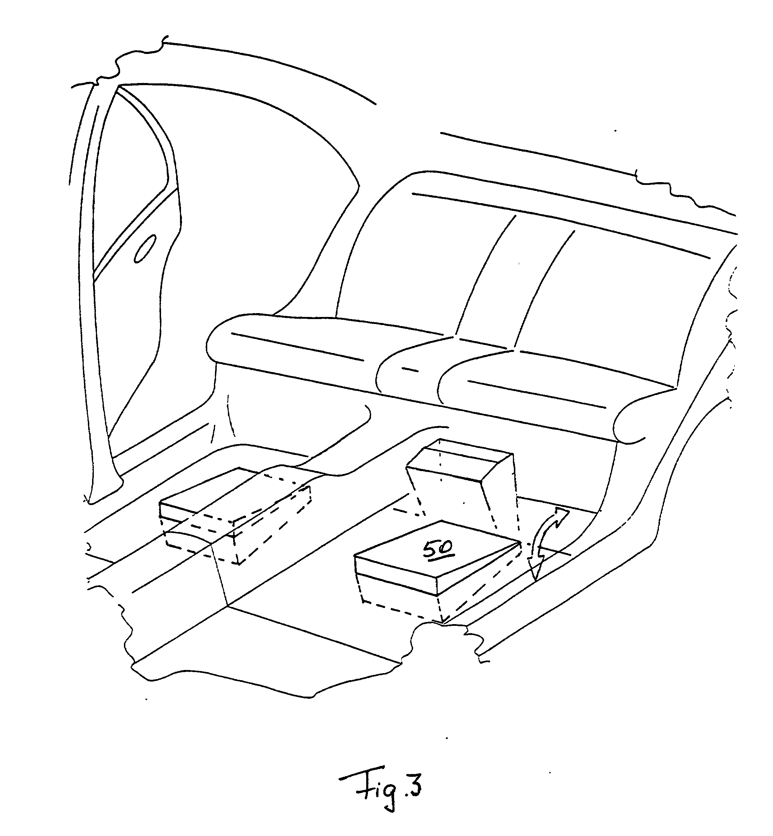

Fig. 2 erläutert eine Ausführungsform eines multifunktionellen Verkleidungsteils gemäß der Erfindung in Form einer Fußstütze mit integriertem Staufach. Die Fußstütze wird gebildet von der Aufnahme 50, die gegebenenfalls mit einem (nicht gezeigten) textilen oder elastomeren Außenmaterial zu verkleiden ist. In der Aufnahme 50 ist ein als Staufach ausgebildeter Innenraum 62 gebildet, der durch eine angelenkte Außenklappe 60 verschließbar ist. Der Innenraum 62 dient als Stauraum beispielsweise für Schuhe eines Mitfahrers. Ferner ist in der Aufnahme 50 ein umlaufender Lüftungskanal 54 gebildet, der mit außenseitig gebildeten Schlitzen 52 zusammenwirkt. Die zugeführte Luft kann geeignet durch die Schlitze 52 ausströmen. Der Lüftungskanal ist endseitig mit im Fahrzeugboden geführten Lüftungszuführungen verbunden. Die Aufnahme 50 hat keilförmige Form und ist an ihrem spitzen Ende mit einer Schwenkachse 58 ausgestattet, die im Fahrzeugboden gelagert ist. Dadurch läßt sich die Aufnahme 50 aus der in Fig. 3 gezeigten bodenseitigen Funktionsstellung in die ebenfalls in Fig. 3 gezeigte gehobene Funktionsstellung verfahren. In der Funktionsstellung läßt sich die Aufnahme 50 geeignet mit Schuhen beladen und sodann in die andere Funktionsstellung zurückschwenken. Eine als Gasfeder ausgebildete Antriebseinrichtung 56 ist vorgesehen, um die Aufnahme 50 zwischen den beiden Positionen zu verschieben. Ferner ist alternativ ein manueller Betrieb mittels Gasfeder sowie eine mechanische Rastung oder ein automatischer Betrieb mittels eines elektrischen, hydraulischen oder pneumatischen Antriebs vorgesehen.

## Patentansprüche

1. Multifunktionelles Verkleidungsteil für einen Kfz-Innenraum, insbesondere für Fußraum, Armlehne oder Kopfstütze, aufweisend ein textiles oder elastomeres Außenmaterial, das in einer Aufnahme (50) aufgenommen ist, wobei die Aufnahme (50) schwenkbar gelagert ist und in der Aufnahme (50) ein Lüftungskanal (54) gebildet ist, der mit außenseitig gebildeten Schlitzen (52) in Verbindung steht, wobei der Lüftungskanal endseitig mit im Kfz geführten Lüftungszuführungen verbunden ist.

2. Multifunktionelles Verkleidungsteil nach Anspruch 1, **dadurch gekennzeichnet, daß** in der Aufnahme (50) ein Innenraum (62) zur Aufnahme von Gegenständen gebildet ist.

3. Multifunktionelles Verkleidungsteil nach Anspruch 1 oder 2, **dadurch gekennzeichnet, daß** in oder unter dem textilen Außenmaterial eine elastomere Einlage eingebettet bzw. angeordnet ist.

4. Multifunktionelles Verkleidungsteil nach Anspruch 3, **dadurch gekennzeichnet, daß** in der elastomeren Einlage oder in dem elastomeren Außenmaterial eine Beleuchtungseinrichtung angeordnet ist.

5. Multifunktionelles Verkleidungsteil nach einem der vorhergehenden Ansprüche, **dadurch gekennzeichnet, daß** eine Antriebseinrichtung (56) vorgesehen ist, um die Aufnahme (50) zu heben und zu senken.

## Claims

1. Multifunctional trim panel for a motor vehicle interior, particularly for the foot area, armrest or headrest, having a textile or elastomeric outer material, which is received in a receptacle (50), the receptacle (50) being pivotably mounted and in the receptacle (50) is formed a ventilation duct (54) connected to externally formed slots (52), the ventilation duct being terminally connected to ventilation feeds carried within the motor vehicle.

2. Multifunctional trim panel according to claim 1, **characterized in that** an interior space (62) for receiving articles is formed in the receptacle (50).

3. Multifunctional trim panel according to claim 1 or 2, **characterized in that** an elastomeric insert is embedded or placed in or under the textile outer material.

4. Multifunctional trim panel according to claim 3, **characterized in that** a lighting device is placed in the elastomeric insert or in the elastomeric outer material.

5. Multifunctional trim panel according to any one of the preceding claims, **characterized in that** a drive mechanism (56) is provided for raising and lowering the receptacle (50).

## Revendications

1. Elément d'habillage multifonctionnel pour habitacle de véhicule, en particulier pour l'espace réservé aux pieds, les accoudoirs ou les appuie-têtes, présentant un matériau extérieur textile ou élastomère, fixé dans un logement (50), le support (50) étant orientable et comprenant un canal d'aération relié à des fentes (52) sur le côté extérieur, ce canal d'aération étant relié - au niveau de ses extrémités - aux conduites d'aération prévues sur le véhicule.

2. Elément d'habillage multifonctionnel suivant la revendication 1, **caractérisé par le fait que**, dans le logement (50), il est prévu un espace intérieur (62) pour le rangement d'objets.

3. Elément d'habillage multifonctionnel suivant la revendication 1 ou 2, **caractérisé par le fait qu**'une insertion d'élastomère est insérée ou disposée dans le matériau extérieur textile ou en dessous de celui-ci.

4. Elément d'habillage multifonctionnel suivant la revendication 3, **caractérisé par le fait qu**'un dispositif d'éclairage est inséré dans l'insertion d'élastomère ou dans le matériau extérieur en élastomère.

5. Elément d'habillage multifonctionnel suivant l'une des revendications précédentes, **caractérisé par le fait qu'**un dispositif d'entraînement (56) est prévu pour soulever ou abaisser le logementt (50).
